# EUROPEAN PATENT SPECIFICATION

(11) **EP 3 521 614 B1**
(45) Date of publication and mention of the grant of the patent: **19.02.2020**
(21) Application number: 17906788.9
(22) Date of filing: 13.12.2017
(51) Int. Cl.: F03G 6/06

(54) **COGENERATION SYSTEM AND METHOD FOR THE COMBINED HEAT AND POWER GENERATION FROM SOLAR THERMAL ENERGY**
SYSTEM UND VERFAHREN ZUR ERZEUGUNG VON THERMISCHER UND ELEKTRISCHER ENERGIE AUS THERMOSOLARER ENERGIE
SYSTÈME ET PROCÉDÉ DE COGÉNÉRATION POUR LA PRODUCTION D'ÉNERGIE THERMIQUE ET ÉLECTRIQUE À PARTIR D'ÉNERGIE THERMOSOLAIRE

(43) Date of publication of application: 07.08.2019
(73) Proprietor: Aislamientos Suaval, S.A., 33469 Carreño (Asturias) (ES)
(72) Inventor: SUAREZ-VALDES SUAREZ, Jose Guillermo, 33469 Carreño Asturias (ES)
(74) Representative: Carvajal y Urquijo, Isabel
(86) International application number: PCT/ES2017/070791
(87) International publication number: WO 2019/053305

(56) References cited:
- WO-A1-2013/070572
- US-A1- 2009 293 940
- US-B2- 6 630 622

## Description

### Field of the invention

The present invention is encompassed within the technical field of thermosolar energy, specifically to the generation of energy in thermosolar plants, and more specifically to the harvesting, storing and reusing of solar radiation to heat a heat transfer fluid (HTF) to a temperature suitable for the operation of a power island during periods of low or non existent solar radiation.

The invention relates, in particular, to a cogeneration system for thermal and electric energy production from thermosolar energy, with a solar field connected to a power island by means of a piping system through which a heat transfer fluid (HTF) flows. The piping system comprises at least a photovoltaic panel placed over the piping system, connected to at least a power storage battery, which is further connected to heating means placed at the piping system, which receive electric power from the battery and heat the heat transfer fluid to a temperature suitable for the operation of a power island during periods of low or non existent solar radiation.

### Background of the invention

The thermosolar technology has experienced a great growth in terms of the generation of electric energy from solar energy, due to its potential and cleanliness with respect to conventional thermal technology.

A thermosolar plant is composed of a solar field in charge of harvesting energy, and of a power island where the harvested energy is processed for the generation of thermal and/or electric energy. This power island can also include a thermal storage system to store the harvested energy for its subsequent contribution when there is no solar radiation. The solar field and the power island are connected by means of a piping system through which a heat transfer fluid (HTF) flows.

In thermosolar technology, the solar energy harvested in the solar fields heats a heat transfer fluid which flows through the piping system. This heat transfer fluid may consist of thermal oil, molten salts, water-steam directly, or others. The heat transferred to this heat transfer fluid is used in the power island for the generation of steam supplying a turbine for the generation of electric energy.

Document US 6 630 622 B2 discloses one example of said thermosolar plants and it is considered to be the closest prior art, its features known in combination form the preamble of claim 1.

Viability and profitability of thermosolar energy systems mainly relies on improving and developing energy storage systems during daytime with great solar radiation, in order to maintain the thermosolar plant working after sunset. The main competitive advantage of thermosolar plants is the ability to provide energy during the night in geographic areas where it is needed, due to energy storage. Thermosolar energy is currently the only renewable energy having this massive energy storage, which allows to provide energy on demand.

One of the problems of the present energy storage systems used in thermosolar plants is that they are based on molten salt technology. This technology requires a high investment and technically it is a very complex system, what means a blocking factor for the growth and development of this energy systems.

Currently, the most widespread technologies of thermosolar concentration systems are cylindrical parabolic collectors and Fresnel linear concentrators, which concentrate solar radiation into a tube through which the heat transfer fluid flows, this heat transfer fluid being heated to a temperature between 300-600°C during daytime, by means of the solar radiation reflected by collectors that impact on the surface of the piping system through which the heat transfer flows, and which reaches the power island. The piping system has a plurality of pipe collectors and a thermal insulating system with a metal cladding which protects the insulation, and it may comprise additionally different vessels and/or tanks for storing the heat transfer fluid.

These pipe collectors cover the entire solar fields and form lines of dozens of thousands linear meters of pipes and dozens of thousands square meters of vessels and tanks. So, the outer metal cladding which covers the pipe collectors, vessels and tanks form a metal surface with an area of about dozens of thousands square meters constantly exposed to solar radiation during daytime, since thermosolar plants are located in high solar radiation areas, typically at least 2200 productive solar hours per year. The solar radiation concentrated on this great area of the surface of the metal cladding is an excess of energy not actually used, and it is therefore a wasted energy.

An additional problem associated with the above one is that this excess of energy due to the solar radiation damages little by little the surface of the outer metal cladding, and so this metal cladding will have to be replaced after a few years generating an extra cost to the thermosolar plant.

It is therefore desirable a cogeneration system and method for thermal and electric energy production from thermosolar energy, which takes advantage of the excess of the solar radiation not actually used and additionally protects the metal cladding from this solar radiation.

### Description of the invention

The present invention provides an advantage with respect to the current generation systems using thermosolar energy, providing a cogeneration system for thermal and electric energy production from thermosolar energy, which takes advantage of the excess of the solar radiation not actually used and additionally protects the metal cladding from this solar radiation.

This is achieved by means of a cogeneration system for thermal and electric energy production from thermosolar energy as disclosed in claim 1 of the present application.

This is a cogeneration system, since it provides both thermal and electric energy from thermosolar energy, and it comprises a solar field which is connected to a power island by means of a piping system through which a heat transfer fluid (HTF) flows.

The piping system comprises a plurality of pipe collectors through which the heat transfer fluid flows, a thermal insulating system covering the pipe collectors, and it may comprise additionally different vessels and/or tanks for storing the heat transfer fluid.

Further, the cogeneration system comprises at least a photovoltaic panel placed over at least a section of the piping system, and fixed to the thermal insulating system. The photovoltaic panel is connected to at least a power storage battery, which is further connected to heating means placed at the pipe collectors, which are configured to receive electric power from the power storage battery and to heat the heat transfer fluid to a temperature suitable for the operation of the power island, that is between 300-600°C during periods of low or non-existent solar radiation.

Although the system can work with only a photovoltaic panel, a preferred embodiment of the invention comprises a plurality of photovoltaic panels, which cover the entire surface of the piping system.

According to different particular embodiments of the invention, the photovoltaic panels may be rigid or flexible.

In case that the piping system further has one or more vessels and/or tanks for storing the heat transfer fluid, the thermal insulating system will cover said vessels and/or tanks, and according to the present invention, one or more photovoltaic panels will be placed covering the vessels and/or tanks. These photovoltaic panels will also be connected to heating means placed at the pipe collectors, vessels and/or tanks, which are configured to receive electric power from the power storage battery and to heat the heat transfer fluid to a temperature suitable for the operation of the power island during periods of low or non-existent solar radiation.

According to different embodiments of the invention, the heating means may be selected between an electric tracing system wound around at least a section of the pipe collectors, and immersion heaters immersed inside at least a section of the pipe collectors.

In accordance with a preferred embodiment, the thermal insulating system comprises an insulating material, a cladding system that covers the insulating material, and a support structure supporting the insulating material and the cladding system. The support structure comprises in turn a plurality of spacer rings placed under the cladding system. According to this preferred embodiment, the photovoltaic panels are fixed to the thermal insulating system by means of fixing structures which are placed over the cladding system and fixed to the spacer rings. This fixation to the thermal insulating system provides the advantage of avoiding the expensive concrete foundations and steel structures to support the photovoltaic panels properly.

So, the object of the present of the present invention is a system which harvest, store and reuse solar radiation for thermal energy by means of implementing photovoltaic panels directly located on the cladding system of pipe collectors, vessels and/or tanks, using specific fixing structures. The final aim is to maintain the temperature of the heat transfer fluid between a range suitable for the operation of the power island, that is 300-600°C, during periods of low or non-existent solar radiation, for instance at night-time or in cloudy days.

The present invention refers to the development of a new complete system to harvest solar energy by means of photovoltaic panels during sun hours, store it in electrical batteries and later transfer the energy to the heat transfer fluid by means of electrical tracing system and/or immersion heaters. Preferably, the photovoltaic panels are supported on the spacers rings of the insulation and the cladding system using a specific fixing structure designed for a proper panel fixation and, at the same time, with a high absorption of the expansions due to temperature variations.

In this way, the solar radiation, which previously fell on the metal cladding of the piping system and was not actually used, now is harvested by the photovoltaic panels and is stored to be used during periods of low or non-existent solar radiation. Therefore, the total hours of electric and/or thermal energy production are increased, with a small investment compared to the current storage energy systems of the current thermosolar plants. So, profitability grows, and the present system make thermosolar plants more competitive within the renewable energy field.

Additionally these photovoltaic panels protect the metal against strong solar radiation, lengthening the working life of the whole system and increasing the thermosolar plant profitability according a long-term view.

The invention also relates to a cogeneration method for thermal and electric energy production from thermosolar energy, as disclosed in claim 9 of the present application.

This cogeneration method provides both thermal and electric energy from thermosolar energy, and it comprises the steps of harvesting solar energy by means of a solar field and transferring said energy to a power island by means of a piping system through which a heat transfer fluid flows.

Additionally, the method comprises the steps of harvesting solar energy by means of at least a photovoltaic panel placed over at least a section of the piping system, storing the energy in at least a power storage battery connected to the photovoltaic panel, and heating the heat transfer fluid of the piping system by means of heating means placed at the piping system. These heating means are connected to the photovoltaic panel, and they are configured to receive electric power from the power storage battery and to heat the heat transfer fluid to a temperature suitable for the operation of the power island during periods of low or non existent solar radiation.

The features, functions and advantages that have been discussed can be achieved independently in various embodiments or may be combined in yet other embodiments further details of which can be seen with reference to the following description and drawings.

### Brief description of the drawings

Next, in order to facilitate the comprehension of the invention, in an illustrative rather than limitative manner an embodiment of the invention with reference to a series of figures shall be made below.
Figure 1 is a schematic perspective view of a section of the present invention showing a section of the piping system and a plurality of photovoltaic panels fixed to it. Part of the insulating system has been removed to show clearly the pipe collector.

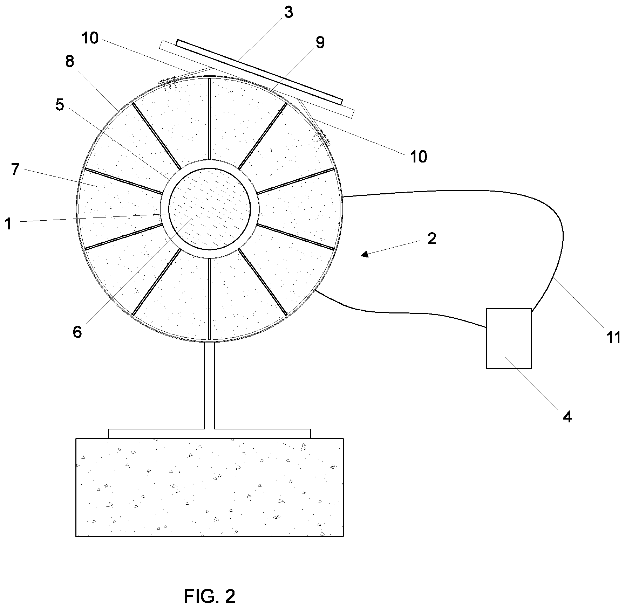

Figure 2 is a front view of the section of the piping system of figure 1 showing the fixing structures that fix the photovoltaic panels to the insulating system.

These figures refer to the following set of elements:
1. pipe collectors
2. thermal insulating system
3. photovoltaic panels
4. power storage battery
5. heating means
6. heat transfer fluid
7. insulating material
8. cladding system
9. spacer rings
10. fixing structures
11. electric wiring system

### Detailed description of the invention

An object of the present invention is a cogeneration system for thermal and electric energy production from thermosolar energy.

This cogeneration system has a solar field connected to a power island by means of a piping system through which a heat transfer fluid (HTF) 6 flows.

As shown in the figures, the piping system comprises a plurality of pipe collectors 1 through which the heat transfer fluid 6 flows, a thermal insulating system 2 which covers the pipe collectors 1, and it may comprise additionally different vessels and/or tanks for storing the heat transfer fluid 6 when necessary.

Further, the cogeneration system of the present invention comprises one or more photovoltaic panels 3 placed over at least a section of the piping system, and fixed to the thermal insulating system 2. The photovoltaic panels 3 are connected to at least a power storage battery 4, which is further connected to heating means 5 placed at the pipe collectors 1. These heating means 5 are configured to receive electric power from the power storage battery 4 and to heat the heat transfer fluid 6 to a temperature suitable for the operation of the power island during periods of low or non-existent solar radiation.

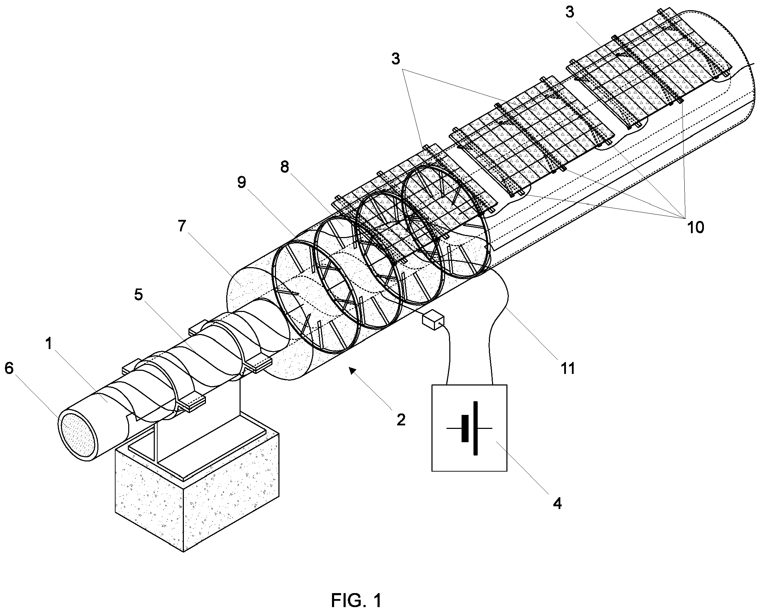

Although the system can work with only a photovoltaic panel 3, a preferred embodiment of the invention comprises a plurality of photovoltaic panels 3, as disclosed in figure 1, which cover the entire surface of the piping system.

According to different particular embodiments of the invention, the photovoltaic panels 3 may be rigid or flexible.

For certain embodiments in which the piping system further has one or more vessels and/or tanks for storing the heat transfer fluid 6, the thermal insulating system 2 will cover said vessels and/or tanks, and according to the present invention, one or more photovoltaic panels3 will be placed covering the vessels and/or tanks. These photovoltaic panels 3 will also be connected to heating means 5 placed at the pipe collectors 1, vessels and/or tanks, which are configured to receive electric power from the power storage battery 4 and to heat the heat transfer fluid 6 to a temperature suitable for the operation of the power island during periods of low or non-existent solar radiation.

According to different embodiments of the invention, the heating means 5 may be selected between an electric tracing system wound around at least a section of the pipe collectors 1, and immersion heaters that are immersed inside at least a section of the pipe collectors 1. Figure 1 shows an electric tracing system wound around a section of the pipe collector 1.

The electric tracing system will wrap the outer surface of the pipe collectors 1, vessels and/or tanks that transport the heat thermal fluid 6 up to the power island, providing the suitable temperature for the operation of said power island, typically 300-600°C. In case of immersion heaters, they will be placed partially inside the pipe collectors 1, vessels and/or tanks to heat directly the heat thermal fluid 6. In both cases, the working hours of the thermosolar plant will increase, until batteries are completely discharged.

So, the photovoltaic panels 3 harvest solar energy during strong solar radiation, and it is transported through an electric wiring system 11 to the storage power storage batteries 4 located on lower part of the piping system. Therefore, during strong solar radiation periods the batteries 4 will be charged by the photovoltaic panels 3 and during periods of low or non-existent solar radiation, they will be activated to power the electric tracing system and/or immersion heaters previously installed around or inside the containment elements of the heat transfer fluid, e.g. pipe collectors 1, vessels and/or tanks.

In accordance with a preferred embodiment, the thermal insulating system 2 comprises an insulating material 7, a metal cladding system 8 that covers the insulating material 7, and a support structure supporting the insulating material and the cladding system. The support structure comprises in turn a plurality of spacer rings 9 placed under the cladding system 8. According to this preferred embodiment, the photovoltaic panels 3 are fixed to the thermal insulating system 2 by means of fixing structures 10 placed over the cladding system 8 and further fixed to the spacer rings 9. The rigid or flexible photovoltaic panels 3 are lightweight, less than 4 kg/m², and so they can be supported on small fixing structures 10 directly located on the cladding system 8 and fixed to the spacer rings 9. Due to this low weight of the photovoltaic panels 3, the existing metal cladding system 8 and spacer rings 9 of the existing piping systems could admit this little overload with minimum resizing and alterations, without additional complex structures made of heavy steel and additional concrete bedplates that are usually needed to support conventional panels.

In this way, the solar radiation, which previously fell on the metal cladding of the piping system and was not actually used, now is harvested by the photovoltaic panels 3 and is stored to be used during periods of low or non-existent solar radiation. Additionally these photovoltaic panels 3 protect the metal cladding 8 from the solar radiation, as shown in figure 1, lengthening the life thereof.

Another object of the invention is a cogeneration method for thermal and electric energy production from thermosolar energy, as disclosed in claim 9 of the present application.

This cogeneration method provides both thermal and electric energy from thermosolar energy, and it comprises the steps of harvesting solar energy by means of a solar field and transferring said energy to a power island by means of a piping system through which a heat transfer 6 fluid flows.

Further, the method comprises the steps of harvesting solar energy by means of one or more photovoltaic panels 3 placed over at least a section of the piping system, storing the energy in at least a power storage battery 4 which is connected to the photovoltaic panels 3, and heating thus the heat transfer fluid 6 of the piping system by means of heating means 5 placed at the piping system. These heating means 5 are connected to the photovoltaic panels 3, and they are configured to receive electric power from the power storage battery 4 and to heat the heat transfer fluid 6 to a temperature suitable for the operation of the power island during periods of low or non existent solar radiation.

Once the invention has been clearly described, it is hereby noted that the particular embodiments described above can be the subject of detail modifications as long as they do not depart from the scope of protection of the appended claims.

## Claims

1. Cogeneration system for thermal and electric energy production from thermosolar energy, comprising a solar field connected to a power island by means of a piping system through which a heat transfer fluid (6) flows, the piping system comprising
- a plurality of pipe collectors (1) through which the heat transfer fluid (6) flows, and
- a thermal insulating system (2) covering the pipe collectors (1),
said cogeneration system **characterized in that** it comprises
- at least a photovoltaic panel (3) placed over at least a section of the piping system, fixed to the thermal insulating system (2), and connected to
- at least a power storage battery (4), which is further connected to
- heating means (5) placed at the pipe collectors (1) configured to receive electric power from the power storage battery (4) and to heat the heat transfer fluid (6) to a temperature suitable for the operation of the power island during periods of low or non-existent solar radiation.

2. Cogeneration system for thermal and electric energy production from thermosolar energy, according to claim 1, wherein the heating means (5) comprises an electric tracing system wound around at least a section of the pipe collectors (1).

3. Cogeneration system for thermal and electric energy production from thermosolar energy, according to claim 1, wherein the heating means (5) comprises immersion heaters arranged on at least a section of the pipe collectors (1).

4. Cogeneration system for thermal and electric energy production from thermosolar energy, according to any of the previous claims, wherein
- the thermal insulating system comprises
- an insulating material (7),
- a cladding system (8) covering the insulating material (7), and
- a support structure supporting the insulating material (7) and the cladding system (8), comprising in turn a plurality of spacer rings (9) placed under the cladding system (8),
- and wherein the photovoltaic panels (3) are fixed to the thermal insulating system (2) by means of fixing structures (10) placed over the cladding system (8) and fixed to the spacer rings (9).

5. Cogeneration system for thermal and electric energy production from thermosolar energy, according to any of the previous claims, wherein
- the piping system further comprises
- at least a vessel and/or a tank, and
- a thermal insulating system (2) covering the vessel and/or tank,
- and wherein at least a photovoltaic panel (3) is placed over the thermal insulating system (2) covering the vessel and/or tank and connected to
- at least a power storage battery (4), which is further connected to
- heating means (5) placed at the pipe collectors (1), vessels and/or tanks, configured to receive electric power from the power storage battery (4) and to heat the heat transfer fluid (6) to a temperature suitable for the operation of the power island during periods of low or non-existent solar radiation.

6. Cogeneration system for thermal and electric energy production from thermosolar energy, according to any of the previous claims, wherein the photovoltaic panels (3) are flexible.

7. Cogeneration system for thermal and electric energy production from thermosolar energy, according to any of claims 1-5, wherein the photovoltaic panels (3) are rigid.

8. Cogeneration method for thermal and electric energy production from thermosolar energy, which comprises harvesting solar energy by means of a solar field and transferring said energy to a power island by means of a piping system through which a heat transfer fluid (6) flows,
said cogeneration method **characterized in that** it comprises
- harvesting solar energy by means of at least a photovoltaic panel (3) placed over at least a section of the piping system,
- storing the energy in at least a power storage battery (4) connected to the photovoltaic panel (3)
- heating the heat transfer fluid (6) of the piping system by means of heating means (5) placed at the piping system, said heating means (5) connected to the photovoltaic panel (3), and configured to receive electric power from the power storage battery (4) and to heat the heat transfer fluid (6) to a temperature suitable for the operation of the power island during periods of low or non existent solar radiation.

## Patentansprüche

1. Kraft-Wärme-Kopplungssystem zur Erzeugung von thermischer und elektrischer Energie aus thermosolarer Energie umfassend ein Solarfeld, das über ein Rohrleitungssystem, durch das ein Wärmeübertragungsfluid (6) fließt, mit einer Energieinsel verbunden ist, wobei das Rohrleitungssystem Folgendes umfasst:
- eine Vielzahl von Kollektorrohren (1), durch die das Wärmeübertragungsfluid (6) fließt, und
- ein Wärmedämmsystem (2), das die Kollektorrohre (1) umhüllt,
wobei das genannte Kraft-Wärme-Kopplungssystem **dadurch gekennzeichnet ist, dass** es Folgendes umfasst:
- mindestens ein Photovoltaikmodul (3), das über mindestens einem Abschnitt des Rohrleitungssystems angeordnet an dem Wärmedämmsystem (2) befestigt ist und verbunden ist mit
- mindestens einer Energiespeicherbatterie (4), die ferner verbunden ist mit
- einer an den Kollektorrohren (1) angeordneten Heizeinrichtung (5), die dazu ausgelegt ist, elektrische Energie von der Energiespeicherbatterie (4) zu beziehen und bei geringer oder nicht vorhandener Sonneneinstrahlung das Wärmeübertragungsfluid (6) auf eine für den Betrieb der Energieinsel geeignete Temperatur zu erwärmen.

2. Kraft-Wärme-Kopplungssystem zur Erzeugung von thermischer und elektrischer Energie aus thermosolarer Energie nach Anspruch 1, wobei die Heizeinrichtung (5) ein elektrisches Begleitheizungssystem umfasst, das um mindestens einen Abschnitt der Kollektorrohre (1) herumgeführt ist.

3. Kraft-Wärme-Kopplungssystem zur Erzeugung von thermischer und elektrischer Energie aus thermosolarer Energie nach Anspruch 1, wobei die Heizeinrichtung (5) Tauchheizelemente umfasst, die auf mindestens einem Abschnitt der Kollektorrohre (1) angeordnet sind.

4. Kraft-Wärme-Kopplungssystem zur Erzeugung von thermischer und elektrischer Energie aus thermosolarer Energie nach einem der vorstehenden Ansprüche, wobei
- das Wärmedämmsystem aus einem Dämmstoff (7) besteht,
- ein Verkleidungssystem (8) das Dämmmaterial (7) umhüllt und
- eine Stützstruktur das Dämmmaterial (7) und das Verkleidungssystem (8) trägt und ihrerseits eine Vielzahl von unter dem Verkleidungssystem (8) angeordneten Abstandsringen (9) umfasst,
- und wobei die Photovoltaikmodule (3) mittels über dem Verkleidungssystem (8) befindlichen und an den Abstandsringen (9) angebrachten Befestigungsstrukturen (10) an dem Wärmedämmsystem (2) befestigt sind.

5. Kraft-Wärme-Kopplungssystem zur Erzeugung von thermischer und elektrischer Energie aus thermosolarer Energie nach einem der vorstehenden Ansprüche, wobei
- das Rohrleitungssystem ferner Folgendes umfasst:
- mindestens einen Behälter und/oder Tank und
- ein Wärmedämmsystem (2), das den Behälter und/oder Tank umhüllt,
- und wobei mindestens ein Photovoltaikmodul (3) über dem den Behälter und/oder Tank umhüllenden Wärmedämmsystem (2) angeordnet ist und verbunden ist mit
- mindestens einer Energiespeicherbatterie (4), die ferner verbunden ist mit
- einer an den Kollektorrohren (1), Behältern und/oder Tanks angeordneten Heizeinrichtung (5), die dazu ausgelegt ist, von der Energiespeicherbatterie (4) elektrische Energie zu beziehen und bei geringer oder nicht vorhandener Sonneneinstrahlung das Wärmeübertragungsfluid (6) auf eine für den Betrieb der Energieinsel geeignete Temperatur zu erwärmen.

6. Kraft-Wärme-Kopplungssystem zur Erzeugung von thermischer und elektrischer Energie aus thermosolarer Energie nach einem der vorstehenden Ansprüche, wobei die Photovoltaikmodule (3) flexibel sind.

7. Kraft-Wärme-Kopplungssystem zur Erzeugung von thermischer und elektrischer Energie aus thermosolarer Energie nach einem der Ansprüche 1 - 5, wobei die Photovoltaikmodule (3) starr sind.

8. Kraft-Wärme-Kopplungsverfahren zur Erzeugung von thermischer und elektrischer Energie aus thermosolarer Energie, umfassend die Gewinnung von Sonnenenergie mittels eines Solarfeldes und die Übertragung der genannten Energie auf eine Energieinsel mittels eines Rohrleitungssystems, durch das ein Wärmeübertragungsfluid (6) fließt,
wobei das genannte Verfahren der Kraft-Wärme-Kopplung **dadurch gekennzeichnet ist, dass** es Folgendes umfasst:
- - Gewinnung von Sonnenenergie durch mindestens ein Photovoltaikmodul (3), das über mindestens einem Abschnitt des Rohrleitungssystems angeordnet ist,
- - Speicherung der Energie in mindestens einer mit dem Photovoltaikmodul (3) verbundenen Energiespeicherbatterie (4)
- - Erwärmung des Wärmeübertragungsfluids (6) des Rohrleitungssystems mittels einer an dem Rohrleitungssystem angeordneten Heizeinrichtung (5), wobei die genannte Heizeinrichtung (5) mit dem Photovoltaikmodul (3) verbunden ist und dazu ausgelegt ist, von der Energiespeicherbatterie (4) elektrische Energie zu beziehen und bei geringer oder nicht vorhandener Sonneneinstrahlung das Wärmeübertragungsfluid (6) auf eine für den Betrieb der Energieinsel geeignete Temperatur zu erwärmen.

## Revendications

1. Système de cogénération pour la production d'énergie thermique et électrique à partir d'énergie thermosolaire, comprenant un champ solaire relié à un îlot de puissance au moyen d'un système de tuyauterie à travers lequel circule un fluide caloporteur (6), le système de tuyauterie comprenant
- une pluralité de collecteurs à tubes (1) à travers lesquels circule le fluide caloporteur (6), et
- un système d'isolation thermique (2) recouvrant les collecteurs à tubes (1), ledit système de cogénération étant **caractérisé en ce qu'**il comprend
- au moins un panneau photovoltaïque (3) placé sur au moins une section du système de tuyauterie, fixé au système d'isolation thermique (2), et connecté à
- au moins une batterie de stockage de puissance (4), qui est en outre reliée à
- des moyens de chauffage (5) placés au niveau des collecteurs à tubes (1) configurés pour recevoir de la puissance électrique à partir de la batterie de stockage de puissance (4) et pour chauffer le fluide caloporteur (6) jusqu'à une température appropriée pour le fonctionnement de l'îlot de puissance pendant des périodes de rayonnement solaire faible ou inexistant.

2. Système de cogénération pour la production d'énergie thermique et électrique à partir d'énergie thermosolaire, selon la revendication 1, dans lequel les moyens de chauffage (5) comprennent un système de traçage électrique enroulé autour d'au moins une section des collecteurs à tubes (1).

3. Système de cogénération pour la production d'énergie thermique et électrique à partir d'énergie thermosolaire, selon la revendication 1, dans lequel les moyens de chauffage (5) comprennent des thermoplongeurs disposés sur au moins une section des collecteurs à tubes (1).

4. Système de cogénération pour la production d'énergie thermique et électrique à partir d'énergie thermosolaire, selon l'une quelconque des revendications précédentes, dans lequel
- le système d'isolation thermique comprend
- un matériau isolant (7),
- un système de revêtement (8) recouvrant le matériau isolant (7), et
- une structure de support supportant le matériau isolant (7) et le système de revêtement (8), comprenant à son tour une pluralité de bagues d'écartement (9) placées sous le système de revêtement (8),
- et dans lequel les panneaux photovoltaïques (3) sont fixés au système d'isolation thermique (2) au moyen de structures de fixation (10) placées sur le système de revêtement (8) et fixées aux anneaux d'écartement (9).

5. Système de cogénération pour la production d'énergie thermique et électrique à partir d'énergie thermosolaire, selon l'une quelconque des revendications précédentes, dans lequel
- le système de tuyauterie comprend en outre
- au moins une cuve et/ou un réservoir, et
- un système d'isolation thermique (2) recouvrant le réservoir et/ou la cuve,
- et dans lequel au moins un panneau photovoltaïque (3) est placé sur le système d'isolation thermique (2) recouvrant la cuve et/ou le réservoir et relié à
- au moins une batterie de stockage de puissance (4), qui est en outre reliée à
- des moyens de chauffage (5) placés au niveau des collecteurs à tubes (1), des cuves et/ou des réservoirs, configurés pour recevoir de la puissance électrique à partir de la batterie de stockage de puissance (4) et pour chauffer le fluide caloporteur (6) jusqu'à une température appropriée pour le fonctionnement de l'îlot de puissance pendant des périodes de rayonnement solaire faible ou inexistant.

6. Système de cogénération pour la production d'énergie thermique et électrique à partir d'énergie thermosolaire, selon l'une quelconque des revendications précédentes, dans lequel les panneaux photovoltaïques (3) sont flexibles.

7. Système de cogénération pour la production d'énergie thermique et électrique à partir d'énergie thermosolaire, selon l'une quelconque des revendications 1-5, dans lequel les panneaux photovoltaïques (3) sont rigides.

8. Procédé de cogénération pour la production d'énergie thermique et électrique à partir d'énergie thermosolaire, qui comprend collecter de l'énergie solaire au moyen d'un champ solaire et transférer ladite énergie à un îlot de puissance au moyen d'un système de tuyauterie à travers lequel circule un fluide caloporteur (6),
ledit procédé de cogénération étant **caractérisé en ce qu'**il comprend
- collecter de l'énergie solaire au moyen d'au moins un panneau photovoltaïque (3) placé sur au moins une section du système de tuyauterie,
- stocker l'énergie dans au moins une batterie de stockage de puissance (4) reliée au panneau photovoltaïque (3),
- chauffer le fluide caloporteur (6) du système de tuyauterie au moyen de moyens de chauffage (5) placés au niveau du système de tuyauterie, lesdits moyens de chauffage (5) étant connectés au panneau photovoltaïque (3), et configurés pour recevoir de la puissance électrique à partir de la batterie de stockage de puissance (4) et pour chauffer le fluide caloporteur (6) jusqu'à une température appropriée pour le fonctionnement de l'îlot de puissance pendant des périodes de rayonnement solaire faible ou inexistant.
